# EUROPEAN PATENT APPLICATION

(11) **EP 2 557 611 A1**
(43) Date of publication of application: **13.02.2013**
(21) Application number: 12005769.0
(22) Date of filing: 08.08.2012
(51) Int. Cl.: H01M 2/10, H01M 2/20

(54) **High voltage secondary battery with earth member**

(30) Priority: 09.08.2011 KR 20110079043
(71) Applicant: SK Innovation Co., Ltd., Seoul 110-110 (KR)
(72) Inventor: Yoon, Jongguk, Yuseong-gu Daejeon 305-770 (KR)
(74) Representative: Banzer, Hans-Jörg

(57) **Abstract**

Provided is a high voltage secondary battery (1000) used for a hybrid electric truck among hybrid electric vehicles (HEV), and more particularly, covers (100, 300) are configured to electrically connect to each other by the earth member (400) to ground the covers (100, 300) so as to move current induced to the covers to a chassis of a car body along the earth member (400) due to the high voltage battery module (120) and set a potential difference of each cover (100, 300) to be 0 (equipotential), thereby preventing a fault of a secondary battery (1000) and an electric shock at the time of maintenance thereof from occurring due to noise.

## Description

### CROSS-REFERENCE TO RELATED APPLICATIONS

This application claims priority to Korean Patent Application No. 10-2011-0079043 filed on August 9, 2011, in the Korean Intellectual Property Office, the disclosure of which is incorporated herein by reference in its entirety.

### TECHNICAL FIELD

The following disclosure relates to a high voltage secondary battery with an earth member used for a hybrid electric truck among hybrid electric vehicles (HEV), and more particularly, to a high voltage secondary battery with an earth member configured to include a lower cover accommodating a battery module having a plurality of stacked and connected battery packs to generate high voltage, an upper cover coupled with a top portion of the lower cover, and a middle cover interposed between the lower cover and the upper cover so as to be coupled with the top portion of the lower cover or a top portion of the battery module, wherein the covers are configured to electrically connect to each other by the earth member to ground the covers so as to move current induced to the covers to a chassis of a car body along the earth member due to the high voltage battery module and set a potential difference of each cover to be 0 (equipotential), thereby preventing a fault of a secondary battery and an electric shock at the time of maintenance thereof from occurring due to noise.

### BACKGROUND

Generally, a car using an internal combustion engine using gasoline or heavy oil as main fuel has a serious effect on occurrence of pollution such as air pollution, and the like. Recently, in order to reduce the occurrence of pollution, an electric vehicle or a hybrid electric vehicle has been actively developed. In this case, as a power source for the electric vehicle or the hybrid electric vehicle, a battery is used. Recently, a high output secondary battery using a non-aqueous electrolyte with a high energy density has been used. A device requiring large power such as a motor driving of the electric vehicle, and the like, generally uses the high voltage secondary battery configured of a battery module in which a plurality of high output battery packs are connected to each other in series.

As described above, the high voltage secondary battery is configured to include a plurality of battery packs that are generally connected to each other in series. In particular, in case of the secondary battery for a hybrid electric truck among the HEVs, the battery module is formed by connecting several to several tens of battery packs to each other in series to generate high voltage of 680 V to 730 V.

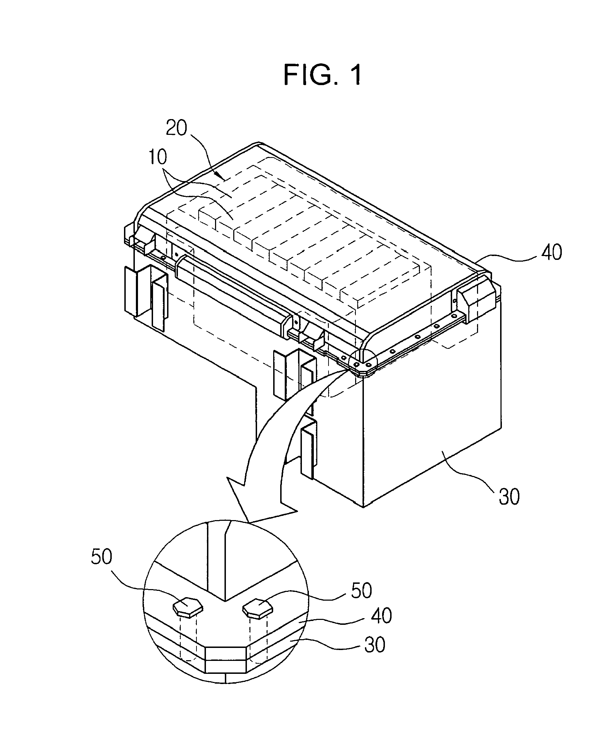

Referring to FIG. 1, the high voltage secondary battery of the related art has a structure in which a battery module 20 configured by connecting several battery packs 100 with each other is accommodated in a lower cover 30 and an upper cover 40 is coupled with a top portion of the lower cover 30.

In this configuration, a middle cover may be interposed between the lower cover 30 and the upper cover 40 and is coupled with the battery module 20 or the lower cover 30.

Further, the covers 30 and 40 may be made of metal materials to have sufficient rigidity for supporting the battery module 20 and outer sides of the covers 30 and 40 are coupled with each other by using bolts 50 that are a fastening member.

Further, the high voltage secondary battery configured as described above is mounted so as to fix the lower cover 30 to a chassis portion of a car body of a hybrid electric truck, such that the lower cover 30 is configured to be ground to the chassis of the car body.

However, the covers 30 and 40 are provided with a painting surface by coating insulating materials on a surface thereof so as to be electrically insulated with the battery module 20 and electric components accommodated in the covers.

Therefore, even though the covers 30 and 40 are fastened by the bolts 50, it is difficult to electrically connect the covers 30 and 40 to each other by the insulating painting surface, such that current induced to the covers 30 and 40 from the high voltage battery module 20 is ground to the chassis of the car body, thereby generating the potential difference.

That is, the covers 30 and 40 do not have equipotential to generate the potential difference therebetween, such that they are in an instable state.

Therefore, noise occurs due to the current induced to the covers 30 and 40, which has a considerable effect on performance of electric components included in the high voltage secondary battery and the secondary battery.

In addition, it is likely to cause an electric shock accident during the check and maintenance of the high voltage secondary battery due to the fault. The solution thereof is required.

Further, as the related art, there is a battery cover grounding device for a portable terminal (Korean Patent No. 10-0842531). The Patent Document discloses the apparatus for a battery cover grounding device including a battery cover made of metal materials; and a ground member mounted on an earth surface of the terminal, wherein the battery cover includes a connection surface which is coated with an insulating material and has one portion opened and the ground member is in contact with the connection surface to electrically connect the battery cover to the connection surface.

The battery cover grounding device of a portable terminal configured as described above connects the battery cover to the ground surface to prevent the battery cover made of metal materials from having electrical properties due to a high frequency generated from circuit devices of a terminal or a transmission signal of an antenna apparatus, thereby implementing the stable operation of the terminal and securing the performance of the antenna apparatus, and the like, but has a problem of the degradation of assembly performance due to a complex structure.

### [Related Art Document]

### [Patent Document]

KR 10-0842531 B1 (June 24, 2008) FIGS. 3 and 4

### SUMMARY

The present invention provides a high voltage secondary battery as defined in claim 1. The dependent claims define preferred embodiments of the invention.

An embodiment of the present invention is directed to providing a high voltage secondary battery with an earth member configured to include a lower cover accommodating a battery module for generating high voltage, an upper cover coupled with a top portion of the lower cover, and a middle cover interposed between the lower cover and the upper cover so as to be coupled with the top portion of the lower cover or a top portion of the battery module, wherein the covers are configured to electrically connect to each other by the earth member to ground the covers so as to move current induced to the covers to a chassis of a car body along the earth member due to the high voltage battery module and set a potential difference of each cover to be 0 (equipotential), thereby preventing a fault of a secondary battery and an electric shock at the time of maintenance thereof from occurring due to noise and making the structure simple to facilitate an assembly.

In one general aspect, there is provided a high voltage secondary battery with an earth member including a lower cover 100 accommodating a battery module 120 having a plurality of stacked and connected battery packs 110 to generate electricity and an upper cover 300 coupled with a top portion of the lower cover 100, wherein the lower cover 100 and the upper cover 300 are made of conductive materials and the lower cover 100 and the upper cover 300 are electrically connected to each other by an earth member 400.

The high voltage secondary battery may further include: a middle cover 200 interposed between the lower cover 100 and the upper cover 300 so as to be coupled with the top portion of the lower cover 100 or a top portion of the battery module 120, wherein the middle cover 200 is made of conductive materials and the earth member 400 includes a first earth member 410 connecting the lower cover 100 to the middle cover 200 and a second earth member 420 connecting the middle cover 200 to the upper cover 300.

Portions at which the earth member 400 is coupled with the lower cover 100, the middle cover 200, and the upper cover 300, respectively, may be fastened with each other by a fastening member 440 and the earth member 400 may be coupled with each cover 100, 200, and 300 by interposing a toothed lock washer 450 between contact surfaces thereof.

The toothed lock washer 450 may be provided with several outer teeth 452 radially formed on an outer side of a disk shaped body 451 of which the inside is hollow and the outer teeth 452 may be tapered or twisted with respect to a plane of the body 451.

Other features and aspects will be apparent from the following detailed description, the drawings, and the claims.

### BRIEF DESCRIPTION OF THE DRAWINGS

FIG. 1 is a perspective view showing a high voltage secondary battery according to the related art.

FIG. 2 is an exploded perspective view showing a high voltage secondary battery with an earth member according to an exemplary embodiment of the present invention.

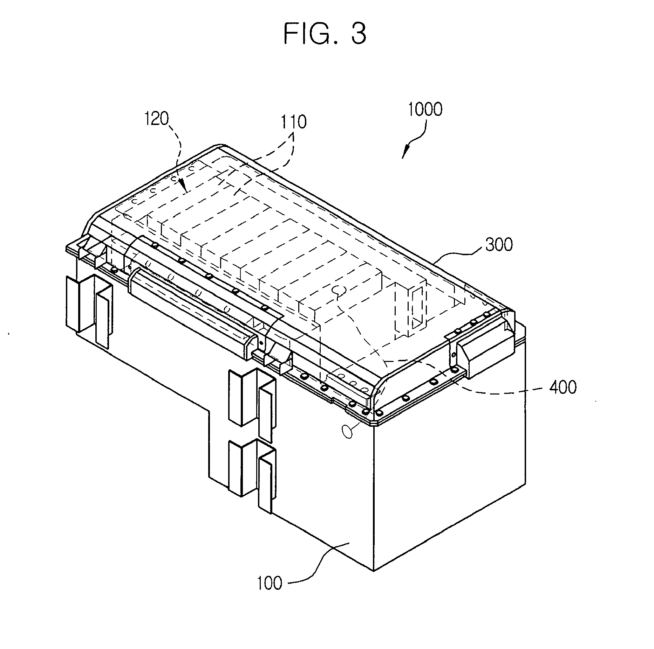

FIG. 3 is an assembled perspective view of FIG. 2.

FIG. 4 is an exploded perspective view showing a high voltage secondary battery with an earth member according to another exemplary embodiment of the present invention.

FIG. 5 is a schematic diagram showing a coupling structure of the earth member according to the exemplary embodiment of the present invention.

FIGS. 6 and 7 are a perspective view and a front view showing a toothed lock washer according to the exemplary embodiment of the present invention.

### DETAILED DESCRIPTION OF EMBODIMENTS

Hereinafter, a high voltage secondary battery with an earth member according to exemplary embodiments of the present invention will be described with reference to the accompanying drawings.

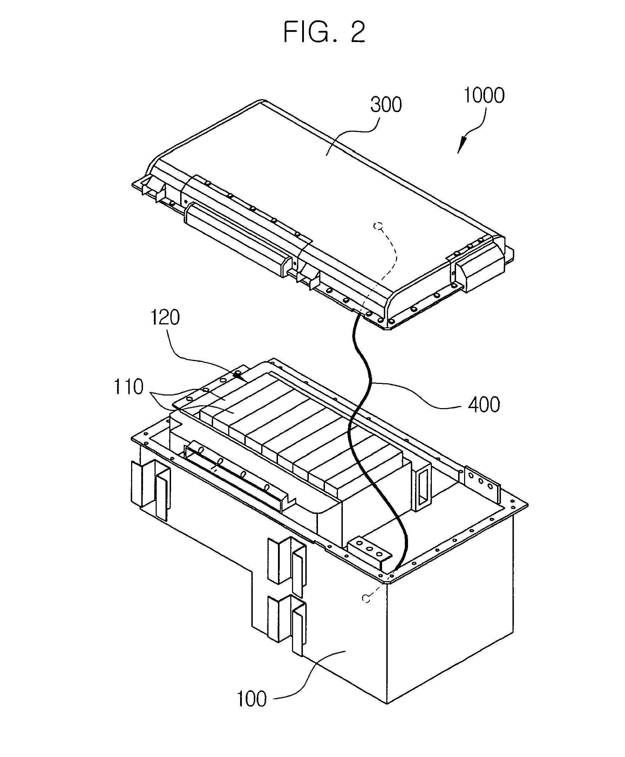

As shown in FIG. 2, the high voltage secondary battery with an earth member according to the exemplary embodiment of the present invention is configured to include a lower cover 100 accommodating a battery module 120 having a plurality of stacked and connected battery packs 110 to generate electricity and an upper cover 300 coupled with a top portion of the lower cover 100.

That is, the high voltage secondary battery with an earth member has a structure in which the battery module 120 formed by connecting the plurality of battery packs 110 to each other in series to generate high voltage is fixedly accommodated in the lower cover 100 and the upper cover 300 is coupled with a top portion of the lower cover 100 to enclose the battery module 120.

In addition, the lower cover 100 and the upper cover 300 are made of conductive materials and the lower cover 100 and the upper cover 300 are electrically connected to each other by an earth member 400.

Herein, the earth member 400 may generally be an electric wire. In this case, various methods for electrically connecting the lower cover 100 and the upper cover 300 to each other may be used.

Herein, the lower cover 100 and the upper cover 300 are made of metal materials to have sufficient rigidity for supporting the battery module 120 and outer sides of the covers 100 and 300 are coupled with each other using bolts that are a fastening member.

However, the covers 100 and 300 are provided with a painting surface by coating insulating materials on a surface thereof so as to be electrically insulated with the battery module 120 and electric components formed therein. Therefore, even though the covers 100 and 300 are fastened with each other by the fastening member, it is difficult to electrically connect the covers 100 and 300 to each other due to the insulating painting surface. As a result, both ends of the earth member 400 are coupled with the inner sides of the lower cover 100 and the upper cover 300 so as to be electrically connected with each other.

In the high voltage secondary battery with an earth member configured as described above, the lower cover 100 is fixedly mounted on a car body of a hybrid electric truck so as to be ground to a chassis of the car body and a separate earth wire may be formed to couple the lower cover 100 with the car body.

Therefore, in the high voltage secondary battery with an earth member according to the exemplary embodiment of the present invention, the lower cover 100 and the upper cover 300 are electrically connected to each other by the earth member 400 so as to be ground to the car body, such that a potential difference of the lower cover 100 and the upper cover 300 may be set to be 0.

That is, the lower cover 100 and the upper cover 300 are ground so as to move current induced to the lower cover 100 and the upper cover 300 by the battery module 120 for generating high voltage to the car body along the earth member 400, such that noise caused by the current induced to the covers 100 and 300 may be prevented, thereby preventing a fault of the high voltage secondary battery and electric components formed therein from occurring and preventing an electric shock at the time of the check and maintenance of the high voltage secondary battery.

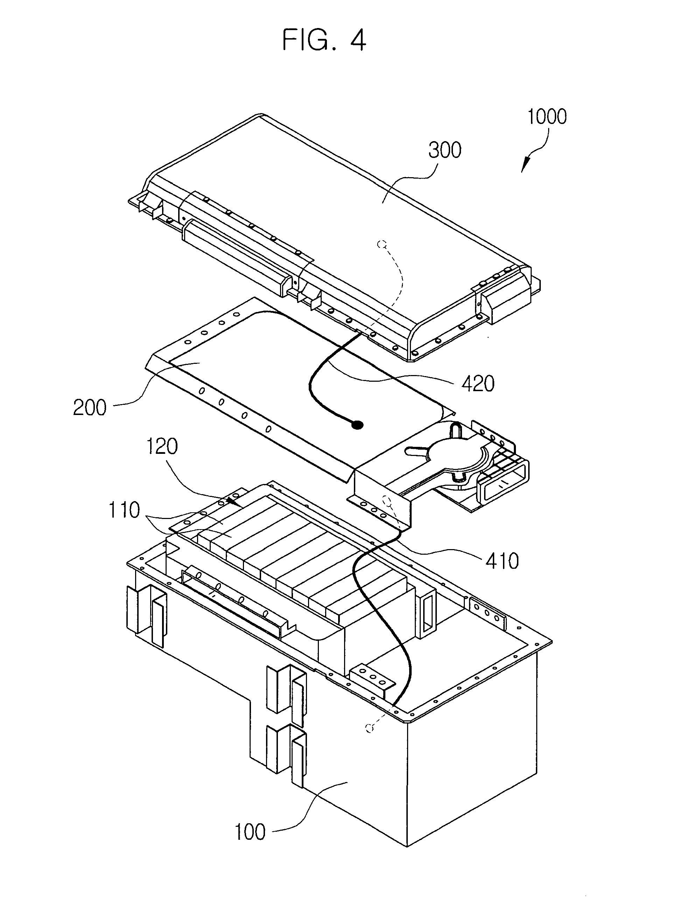

Further, as shown in FIG. 4, a high voltage secondary battery with an earth member according to another exemplary embodiment of the present invention further includes a middle cover 200 interposed between the lower cover 100 and the upper cover 300 so as to be coupled with a top portion of the lower cover 100 or a top portion of the battery module 120, wherein the middle cover 200 is made of conductive materials and the earth member 400 may be configured to include a first earth member 410 coupling the lower cover 100 with the middle cover 200 and a second earth member 420 coupling the middle cover 200 with the upper cover 300.

The high voltage secondary battery with an earth member has a structure in which the middle cover 200 is interposed between the lower cover 100 and the upper cover 300 so as to electrically connect the covers 100, 200, and 300, respectively, to the earth members 410 and 420. Similarly to the lower cover 100 and the upper cover 300, the middle cover 200 is also made of metal materials so as to support the battery module 120 and is coupled with the lower cover 100 and the battery module 120 and the outer side of the middle cover 200 is coupled with the covers 100 and 300 by bolts that are the fastening member.

In this configuration, one end of the first earth member 410 may be coupled with an inner side of the lower cover 100 and the other end thereof may be coupled with a bottom surface of the middle cover 200 and one end of the second earth member 420 is coupled with a top surface of the middle cover 200 and the other end thereof may be coupled with a bottom surface of the upper cover 300.

In addition, the middle cover 200 may be provided with a painting surface by coating insulating materials on a surface thereof so as to be electrically insulated with the battery module 120 formed at the bottom portion thereof and the electric components therearound. As a result, even though the middle cover 200 is fastened with the lower cover 100 by the fastening member, it is difficult to electrically connect the middle cover 200 to the lower cover 100 due to the insulating painting surface.

As a result, the lower cover 100 is electrically connected to the middle cover 200 by the first earth member 410 and the middle cover 200 is electrically connected to the upper cover 300 by the second earth member 420.

Herein, the earth members 410 and 420 may also be a general electric wire. In this case, various methods for electrically connecting the covers 100,200,300 to each other may be used.

Therefore, as described above, in the high voltage secondary battery with an earth member according to the exemplary embodiment of the present invention, the lower cover 100, the middle cover 200, and the upper cover 300 are electrically connected to one another by the first earth member 410 and the second earth member 420 so as to be ground to the car body, thereby setting the potential difference between respective covers 100, 200, and 300 to be 0.

In this case, the high voltage secondary battery with an earth member according to the exemplary embodiment of the present invention may be configured to include an inlet duct and an outlet duct so as to couple both ends of the battery module 120 and the lower cover 100 with each other for cooling the battery module 120 accommodated in the lower cover 100, wherein one portion of the bottom surface of the middle cover 200 may be provided with a ventilation fan so as to be coupled with the outlet duct and the upper cover 300 may be provided with an inlet and an outlet each coupled with the inlet duct and the ventilation fan so as to move an cooling air.

Further, voltage sensing lines and electrode terminals connected to the battery packs 110 configuring the battery module 120 may be configured to be accommodated in the lower cover 100.

Therefore, it is preferable to select the coupling position and the structure of the first earth member 410 and the second earth member 420 so as not to be interfered with components for the cooling of the battery module 120 and the electrical connection therewith in the assembled state. In addition, the earth members 410 and 420 should not be connected to other electric components.

In addition, it is preferable to remove the insulating painting surface of the covers 100, 200, and 300 so that portions at which the earth members 410 and 420 are coupled with the covers 100, 200, and 300 may electrically contact each other well or to form the covers so as not to form the insulating painting surface on a portion thereof.

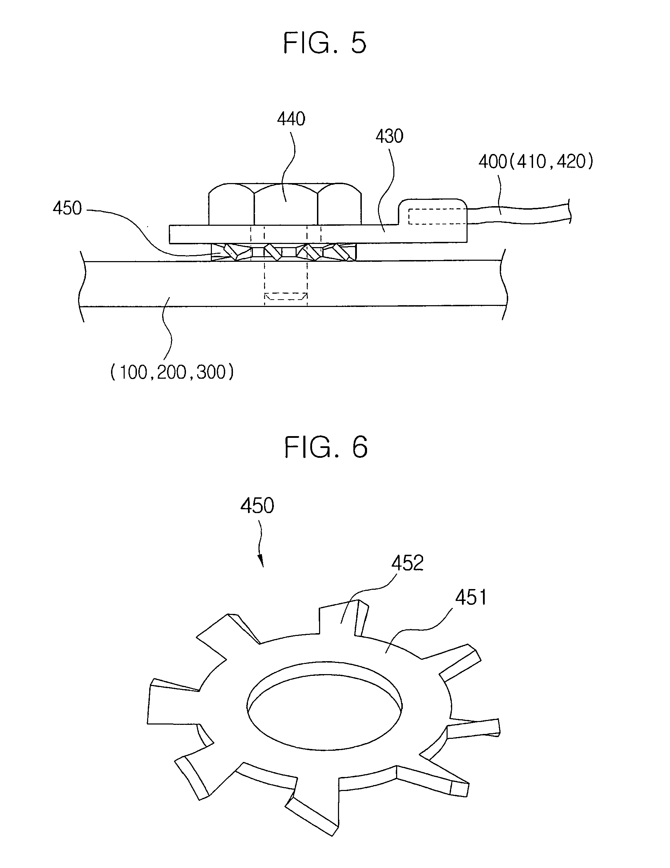

In addition, as shown in FIG. 5, the portions at which the earth member 400 is coupled with the lower cover 100, the middle cover 200, and the upper cover 300, respectively, are fastened with each other by the fastening member 400 but, the earth member 400 may be coupled with the covers 100, 200, and 300, having a toothed lock washer 450 interposed between the contact surfaces of the earth member 400 and each of the covers 100, 200, and 300.

That is, when the earth member 400 is configured of an electric wire, a terminal 430 is coupled with an end of the earth member 400 and the toothed lock washer 450 is interposed between the contact surfaces of the covers 100, 200, and 300 and the terminal 430 and is fastened by bolts that are the fastening member 440.

In this case, the toothed lock washer 450 serves to prevent the earth member 400 from being released due to vibrations of a vehicle. Generally, the toothed lock washer 450 is made of spring steel, but may be made of materials with good conductivity.

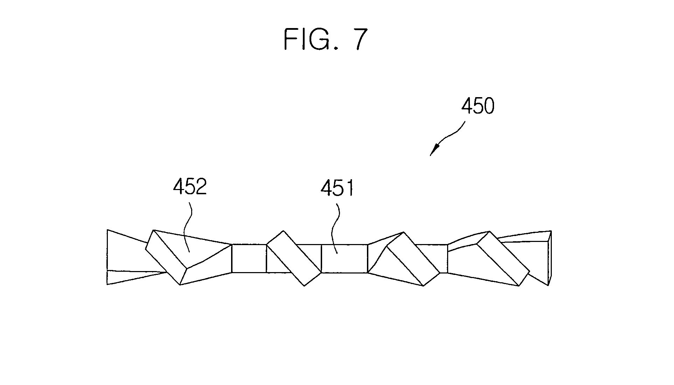

In addition, as shown in FIGS. 6 and 7, several outer teeth 452 are radially formed on an outer circumferential surface of a disk shaped body 451 of which the inside is hollow. Herein, the toothed lock washer 450 in which the outer teeth 452 is tapered or twisted with respect to a plane of the body 451 may be used.

Therefore, when the earth member 400 is coupled with the covers using the fastening member, the toothed lock washer 450 is pressed and thus, the earth member 400 cannot easily be released by the outer teeth 452. In addition, even though the painting surface of the cover is formed, the painting surface is scratched due to the outer teeth 452 or the outer teeth 452 are dug into the painting surface, such that the metal surface of the cover may electrically contact the earth member 400 well.

That is, the painting surface of the cover may easily contact the metal surface of the cover by digging the outer teeth 452 of the toothed lock washer 450 thereinto. As a result, even though the earth member 400 is coupled with the covers in the state in which the insulating painting surface is formed on the cover, good electric conduction can be achieved.

In this case, the outer teeth 452 of the toothed shape washer 450 may be radially formed on the outer circumferential surface of the body 451 but formed at a predetermined distance. However, the outer teeth 452 of the toothed shape washer 450 may be formed in the inner side of the circumferential surface, formed to be overlapped with each other in the tapered state, or formed in a form in which gear shaped protrusions are formed on both surfaces of the disk shaped body 451 or the contact surface with the cover.

According to the exemplary embodiments of the present invention, in the high voltage secondary battery with an earth member, the covers enclosing the high voltage battery module are coupled with each other by the earth member so as to be ground to the chassis of the car body, such that each cover is maintained at equipotential (potential difference 0), thereby preventing the fault of the secondary battery and the electric components configured therein from occurring due to the noise and the electric shock from occurring during the check and maintenance of the high voltage secondary battery.

The present invention is not limited to the aforementioned exemplary embodiment and an application range is various and it is apparent that various modifications can be made to those skilled in the art without departing from the spirit of the present invention described in the appended claims.

## Claims

1. A high voltage secondary battery (1000) with an earth member including a lower cover (100) accommodating a battery module (120) having a plurality of stacked and connected battery packs (110) to generate electricity and an upper cover (300) coupled with a top portion of the lower cover (100), wherein the lower cover (100) and the upper cover (300) are made of conductive materials and the lower cover (100) and the upper cover (300) are electrically connected to each other by an earth member (400).

2. The high voltage secondary battery (1000) of claim 1, further comprising:
a middle cover (200) interposed between the lower cover (100) and the upper cover (300) so as to be coupled with the top portion of the lower cover (100) or a top portion of the battery module (120),
wherein the middle cover (200) is made of conductive materials, and
the earth member (400) includes a first earth member (410) connecting the lower cover (100) to the middle cover (200) and a second earth member (420) connecting the middle cover (200) to the upper cover (300).

3. The high voltage secondary battery (1000) of claim 1 or 2, wherein portions at which the earth member (400) is coupled with the lower cover (100), the middle cover (200), and the upper cover (300), respectively, are fastened with each other by a fastening member (440), and
the earth member (400) is coupled with each cover (100, 200, 300) by interposing a toothed lock washer (450) between contact surfaces thereof.

4. The high voltage secondary battery (1000) of claim 3, wherein the toothed lock washer (450) is provided with several outer teeth (452) radially formed on an outer side of a disk shaped body (451) of which the inside is hollow, and
the outer teeth (452) are tapered or twisted with respect to a plane of the body (451).
